# EUROPÄISCHE PATENTSCHRIFT

(11) **EP 3 107 796 B1**
(45) Veröffentlichungstag und Bekanntmachung des Hinweises auf die Patenterteilung: **29.08.2018**
(21) Anmeldenummer: 15700500.0
(22) Anmeldetag: 20.01.2015
(51) Int. Cl.: B62D 25/08, B62D 29/04

(54) **AUFNAHME FÜR EIN FEDERBEIN**
HOLDER FOR A SUSPENSION STRUT
RÉCEPTACLE POUR JAMBE DE SUSPENSION

(30) Priorität: 21.02.2014 DE 102014203125
(43) Veröffentlichungstag der Anmeldung: 28.12.2016
(73) Patentinhaber: ZF Friedrichshafen AG, 88046 Friedrichshafen (DE)
(72) Erfinder: HOFMANN, Peter, 82319 Starnberg (DE); MOELLER, Matthias, 32257 Buende (DE)
(86) Internationale Anmeldenummer: PCT/EP2015/050996
(87) Internationale Veröffentlichungsnummer: WO 2015/124347

(56) Entgegenhaltungen:
- DE-A1- 10 033 712
- DE-A1-102009 024 622
- FR-A1- 2 967 965

## Beschreibung

Die Erfindung betrifft eine Aufnahme für ein Stoßdämpferelement, insbesondere für ein Federbein eines Kraftfahrzeuges, mit einem Stützlager für das Stoßdämpferelement.

Eine Federbeinaufnahme ist beispielsweise aus der DE 10 2008 050 297 A1 bekannt. Federbeinaufnahmen eines Fahrzeuges dienen zur Aufnahme eines Federbeines eines Fahrwerks und damit zur Ein- und Weiterleitung der auf die Karosserie bzw. das Fahrwerk wirkenden Kräfte. Sie stellen somit die Verbindung zwischen Federbein und Karosserie dar.

Aus der FR 2 967 965 A1 ist eine Aufnahme für ein Stoßdämpferelement mit einem Stützlager für das Stoßdämpferelement bekannt, wobei die Aufnahme aus einem thermoplastischen Faserkunststoffmaterial gebildet ist. Um die Biegesteifigkeit des Stützlagers zu erhöhen ist eine rippenartige Versteifung vorhanden.

Federbeinaufnahmen umfassen ein Federbeinstützlager zur Lagerung des oberen Endes eines Federbeins in einem Kraftfahrzeug. Das Federbeinstützlager ist mit dem oberen Ende des Federbeins verbunden und wird durch ein Elastomerlager gebildet, das Schwingungen des Federbeins aufnimmt. Das Elastomerlager ist in einem Gehäuse angeordnet, das an der Wand der Federbeinaufnahme angebracht wird. Des Weiteren umfasst die Federbeinaufnahme einen Anschlagpuffer in einem Anschlagtopf, der als Endanschlag im Federweg dient. Die Wand der Federbeinaufnahme, das Gehäuse des Federbeinstützlagers und der Anschlagtopf bestehen aus Aluminium. Aufgrund dieses Aufbaus weisen herkömmliche Federbeinaufnahmen ein relativ hohes Gewicht auf und sind kompliziert in der Herstellung.

Es besteht die Aufgabe, eine Aufnahme für ein Stoßdämpferelement, insbesondere ein Federbein eines Kraftfahrzeuges zu schaffen, das gegenüber herkömmlichen Federbeinaufnahmen ein geringeres Gewicht aufweist und/oder einfacher herstellbar ist.

Diese Aufgabe wird durch die im Anspruch 1 angegebene Erfindung gelöst. Vorteilhafte Ausgestaltungen sind den Unteransprüchen zu entnehmen.

Erfindungsgemäß ist eine Aufnahme für ein Stoßdämpferelement, insbesondere für ein Federbein eines Kraftfahrzeuges geschaffen, mit einem Stützlager für das Stoßdämpferelement, dadurch gekennzeichnet, dass die Aufnahme und das Stützlager einteilig als Organoblech-Bauteil ausgebildet sind.

Die vorliegende Erfindung beruht auf der Erkenntnis, dass durch die Verwendung von Organoblech als Werkstoff funktionale Komponenten der Aufnahme kombiniert und integriert werden können. Dabei werden die federelastischen Eigenschaften des Organoblechs ausgenutzt, um das Elastomerlager einschließlich des Gehäuses für das Elastomerlager zu ersetzen. Durch die Einsparung von Bauteilen reduziert sich das Gewicht der Aufnahme.

Ein weiterer Vorteil der vorliegenden Erfindung liegt in der Einsparung von Fugen im Bereich des Stützlagers und der resultierenden besseren Abkapselung gegenüber Schmutz und Umwelteinflüssen.

Darüber hinaus wird die Herstellung der Aufnahme vereinfacht. Beispielsweise können die bei herkömmlichen Federbeinaufnahmen erforderlichen Verrollungsprozesse (formschlüssiges Aufbringen eines Deckels) zum Verschließen des Lagers entfallen.

Unter Organoblech ist in Bezug auf die vorliegende Erfindung ein Faser-Kunststoff-Verbundmaterial (FKV) in Form eines endlosfaserverstärkten thermoplastischen Kunststoffes zu verstehen. Dabei dienen als Glasfaser, Kohlefaser oder Aramidfaser bzw. Kevlar ausgebildete Verstärkungsfasern, insbesondere in Form von Endlosfasern, der Lastaufnahme. Zur Gewährleistung der Faserorientierung und der Formstabilität sind die vorgenannten Verstärkungsfasern in einen thermoplastischen Matrixwerkstoff (z.B. Polyamid, PA) eingebettet. Die in den Matrixwerkstoff eingebetteten Fasern können dabei in einer Richtung orientiert oder in einem beliebigen Winkel zueinander als Gewebe oder Gelege angeordnet sein.

Die vorliegende Erfindung eignet sich insbesondere für die Aufnahme von Federbeinen, wie sie beispielsweise in McPherson-Achsen zum Einsatz kommen. Derartige Federbeine bestehen im Wesentlichen aus einer Feder, einem Stoßdämpfer und einem Achsschenkel. Derartige Federbeine bilden eine bestimmte Form der Einzelradaufhängung an der Vorderachse eines Fahrzeugs. Das Federbein übernimmt die Verbindung zwischen dem Radträger und der Karosserie. Das Federbein dient der Federung des Fahrzeugs, der Begrenzung der Ein- und Ausfederwege (Zug- und Druckanschlag), Schwingungsdämpfung, der Aufnahme des Federbeinlagers zur Anbindung an die Karosserie, sowie der Übertragung der Lenkbewegung.

Die vorliegende Erfindung eignet sich jedoch auch für die Aufnahme eines Stoßdämpfers einer Doppelquerlenker-Achse. Bei Doppelquerlenker-Achsen wird der Radträger von zwei Dreiecksquerlenkern und einer Spurstange geführt. Das auf dem unteren Querlenker stehende Federbein übernimmt die Vertikalabstützung.

In einer Ausgestaltung ist der das Stützlager bildende Bereich der Aufnahme bzw. des Organoblech-Bauteils federelastisch ausgebildet, insbesondere in Richtung eines Federweges eines in der Aufnahme aufgenommenen Stoßdämpferelementes. Die federelastischen Eigenschaften des Stützlagers können zusätzlich angepasst werden, indem der das Stützlager bildende Bereich der Aufnahme eine unebene Oberfläche aufweist. Beispielsweise kann der das Stützlager bildende Bereich der Aufnahme kreis- oder ringförmig sein und eine wellenförmige Oberfläche aufweisen, wobei die Wellen konzentrisch um den Mittelpunkt des das Stützlager bildenden Bereichs der Aufnahme verlaufen. Eine derartige Oberfläche verbessert die Federeigenschaften des Stützlagers. Insbesondere unterstützt eine unebene Oberfläche das Federn in axialer Richtung und ermöglicht es, Federeigenschaften herzustellen, die mit denen eines herkömmlichen Elastomerlagers vergleichbar sind.

In einer anderen Ausgestaltung wird die unebene Oberfläche durch eine oder mehrere Sicken gebildet, die konzentrisch um den Mittelpunkt des das Stützlager bildenden Bereichs der Aufnahme verlaufen. Durch die Sicken können auch kardanische Bewegungen abgefedert werden.

In einer Ausgestaltung weist der das Stützlager bildende Bereich der Aufnahme bzw. des Organoblech-Bauteils eine geringere Steifigkeit als andere oder alle anderen Bereiche des Organoblech-Bauteils auf. Insbesondere ist das Organoblech-Bauteil im Bereich des Stützlagers federelastisch, wohingegen es in Bereichen der Karosserieanbindung möglichst steif ausgebildet ist.

Das Organoblech-Bauteil enthält zwei verschiedene Verstärkungsfasern. Der das Stützlager bildende Bereich des Organoblech-Bauteils enthält Verstärkungsfasern, die weniger steif sind, als Verstärkungsfasern, die in anderen oder allen anderen Bereichen des Organoblech-Bauteils enthalten sind. Somit kann das Stützlager ausreichend elastisch ausgestaltet werden, um die gewünschten Federeigenschaften herzustellen. Die übrigen Bereiche des Organoblech-Bauteils hingegen können die für die Anbindung an die Karosserie erforderliche Steifigkeit aufweisen. In einer Ausgestaltung sind die steiferen Verstärkungsfasern durch Karbon- und/oder Kohlefasern gebildet.

In einer Ausgestaltung der Erfindung ist an einer Innenseite der Aufnahme ein Kunststoffinnenteil angespritzt, insbesondere ein Kunststoffinnenteil, das die Innenseite der Aufnahme auskleidet. Das Kunststoffinnenteil kann Anschluss- und/oder Befestigungselemente umfassen, beispielsweise zum Anschluss oder zur Führung von Kabeln oder Leitungen. Dies kann in einem einzigen Herstellungsschritt erfolgen, wodurch die Herstellung der Aufnahme zusätzlich vereinfacht wird.

In einer Ausgestaltung umfasst das Kunststoffinnenteil eine oder mehrere Verstärkungsrippen. Die Verstärkungsrippen können beispielsweise in dem Bereich um das Stützlager herum angeordnet sein. Dies erhöht die Steifigkeit der Aufnahme zusätzlich, insbesondere in dem an das federnde Stützlager angrenzenden Bereich.

Nachstehend ist anhand der Zeichnung ein Ausführungsbeispiel der Erfindung näher beschrieben. Es zeigt in schematisierter Darstellung:

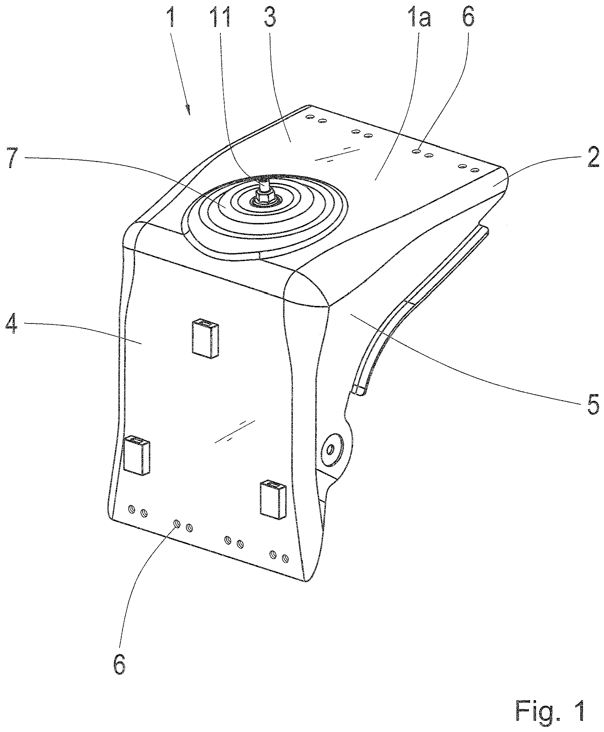

Fig. 1 eine perspektivische Ansicht der Außenseite einer Federbeinaufnahme gemäß einer Ausgestaltung der Erfindung;

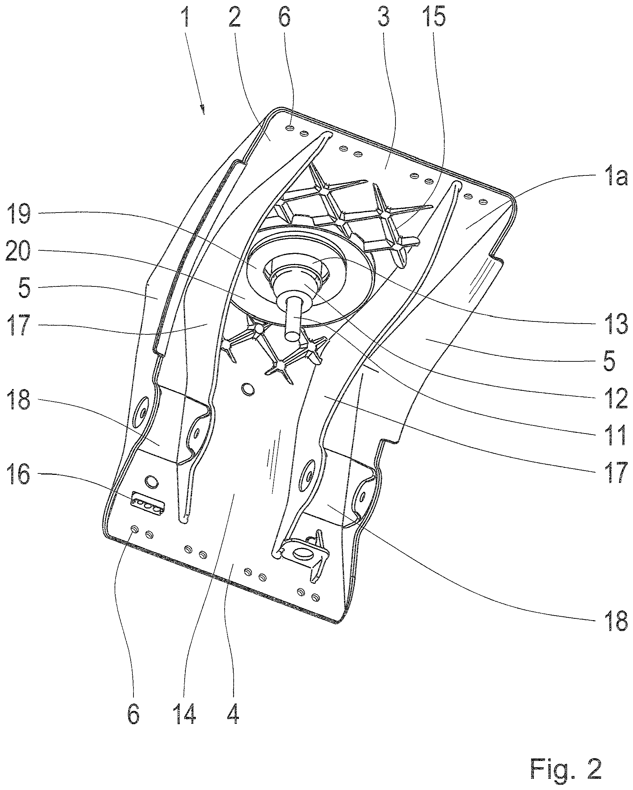

Fig. 2 eine perspektivische Ansicht der Innenseite der Federbeinaufnahme aus Fig. 1;

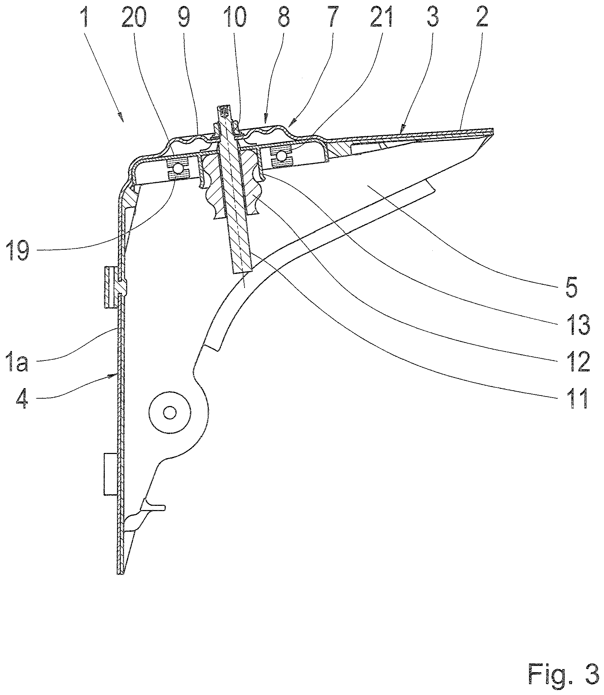

Fig. 3 einen Querschnitt durch die Federbeinaufnahme aus den Figuren 1 und 2.

Eine Federbeinaufnahme 1 gemäß einer Ausgestaltung der vorliegenden Erfindung umfasst eine Außenwand 2, die einen quer zum Federweg eines Federbeines verlaufenden ersten Abschnitt 3 und einen nahezu rechtwinklig dazu verlaufenden zweiten Abschnitt 4 aufweist. Zwischen den ersten und zweiten Abschnitten 3, 4 verlaufen Seitenabschnitte 5, die die Steifigkeit der Federbeinaufnahme 1 erhöhen. Die ersten und zweiten Abschnitte 3, 4 weisen Montagehilfen 6 auf, mittels derer die Federbeinaufnahme 1 an (nicht gezeigten) Quer- oder Längsträgern einer Karosserie eines Kraftfahrzeugs befestigt werden kann.

In den ersten Abschnitt 3 ist ein Federbeinstützlager 7 integriert, d.h. die Außenwand 2 der Federbeinaufnahme 1 und das Federbeinstützlager 7 sind einstückig aus Organoblech hergestellt und bilden ein Organoblech-Bauteil 1a. Das Federbeinstützlager 7 weist eine mit Sicken 8 versehene Wand 9 auf, wobei die Sicken 8 konzentrisch um ein Durchgangsloch 10 für eine Kolbenstange 11 des Federbeins verlaufen. Mit anderen Worten weist die Wand 9 eine unebene, insbesondere wellenartige Oberfläche auf, wobei die Wellen konzentrisch um das Durchgangsloch 10 verlaufen. Bei einer Bewegung der Kolbenstange 11 entlang des Federweges unterstützt diese Struktur eine Expansion und Kontraktion der Wand 9. Anhand der Sicken 8 lassen sich also die Federeigenschaften des Federbeinstützlagers 7 beeinflussen oder einstellen.

Des Weiteren weist die Federbeinaufnahme 1 einen Anschlagpuffer 12 in einem Anschlagtopf 13 auf. Der Anschlagpuffer 12 dient als Endanschlag im Federweg und ist dazu ausgebildet, sich in dem Anschlagtopf 13 zu komprimieren.

Auf der Innenseite der Federbeinaufnahme 1 ist ein Kunststoff-Spritzgussteil 14 angeordnet. Das Spritzgussteil 14 bedeckt die gesamte Innenseite der Außenwand 2. Im Bereich des Federbeinstützlagers umfasst das Spritzgussteil 14 mehrere quer zueinander verlaufende Verstärkungsrippen 15. Das Spritzgussteil 14 umfasst außerdem Anschluss- oder Montageteile, wie z.B. Kabelführungen 16 sowie parallel zu den Seitenabschnitten 5 verlaufende kammartige Stege 17. Zwischen den Seitenabschnitten 5 und den Stegen 17 sind Metalleinleger 18 mit zusätzlichen Montagehilfen angeordnet.

Darüber hinaus weist die Federbeinaufnahme 1 ein ringförmiges Drucklager 19 für eine (nicht gezeigte) Feder des Federbeins auf. Das Drucklager 19 besteht aus Kunststoff und ist in einem deckelartigen Druckverteiler 20 aus Metall an der Innenseite des Abschnittes 3 angeordnet. Der Druckverteiler kann mit der Außenwand 2 im Bereich des ersten Abschnittes verschraubt sein. In dem Drucklager 19 ist ein Kugellager 21 angeordnet, welches bei einer McPherson-Vorderachse dazu dient, Lenkbewegungen gegenüber einer festen Karosserieanbindung umzusetzen.

### Bezugszeichen

- 1: Federbeinaufnahme, Aufnahme
- 1a: Organoblech-Bauteil
- 2: Außenwand
- 3: erster Abschnitt
- 4: zweiter Abschnitt
- 5: Seitenabschnitte
- 6: Montagehilfen
- 7: Federbeinstützlager
- 8: Sicken
- 9: Wand
- 10: Durchgangsloch
- 11: Kolbenstange
- 12: Anschlagpuffer
- 13: Anschlagtopf
- 14: Spritzgussteil
- 15: Verstärkungsrippen
- 16: Kabelführungen
- 17: kammartige Stege
- 18: Metalleinleger
- 19: Drucklager
- 20: Druckverteiler
- 21: Kugellager

## Patentansprüche

1. Aufnahme (1) für ein Stoßdämpferelement, insbesondere für ein Federbein eines Kraftfahrzeuges, mit einem Stützlager (7) für das Stoßdämpferelement, die Aufnahme (1) und das Stützlager (7) sind einteilig als Organoblech-Bauteil (1a) ausgebildet, wobei der das Stützlager (7) bildende Bereich des Organoblech-Bauteils (1a) federelastisch ausgebildet ist, **dadurch gekennzeichnet, dass** das Organoblech-Bauteil (1a) zwei verschiedene Verstärkungsfasern enthält, wobei der das Stützlager (7) bildende Bereich des Organoblech-Bauteils (1a) Verstärkungsfasern enthält, die weniger steif sind, als Verstärkungsfasern, die in einem anderen oder allen anderen Bereichen des Organoblech-Bauteils (1a) enthalten sind.

2. Aufnahme (1) nach Anspruch 1, wobei der das Stützlager (7) bildende Bereich des Organoblech-Bauteils (1a) in Richtung eines Federweges eines in der Aufnahme (1) aufgenommenen Stoßdämpferelementes federelastisch ausgebildet ist.

3. Aufnahme (1) nach Anspruch 1 oder 2, wobei der das Stützlager (7) bildende Bereich des Organoblech-Bauteils (1a) eine unebene Oberfläche aufweist.

4. Aufnahme (1) nach Anspruch 3, wobei der das Stützlager (7) bildende Bereich des Organoblech-Bauteils (1a) kreis- oder ringförmig ist und eine wellenförmige Oberfläche aufweist, wobei die Wellen konzentrisch um den Mittelpunkt des das Stützlager (7) bildenden Bereichs der Aufnahme (1) verlaufen.

5. Aufnahme (1) nach Anspruch 3 oder 4, wobei der das Stützlager bildende Bereich des Organoblech-Bauteils (1a) kreis- oder ringförmig ist und eine oder mehrere Sicken (8) aufweist, die konzentrisch um den Mittelpunkt des das Stützlager (7) bildenden Bereichs der Aufnahme (1) verlaufen.

6. Aufnahme (1) nach einem der vorhergehenden Ansprüche, wobei der das Stützlager (7) bildende Bereich des Organoblech-Bauteils (1a) eine geringere Steifigkeit als andere oder alle anderen Bereiche des Organoblech-Bauteils (1a) aufweist.

7. Aufnahme (1) nach Anspruch 1, wobei die steiferen Verstärkungsfasern durch Karbon- und/oder Kohlefasern gebildet sind.

8. Aufnahme (1) nach einem der vorhergehenden Ansprüche, wobei an einer Innenseite der Aufnahme (1) ein Kunststoffinnenteil angespritzt ist, insbesondere ein Kunststoffinnenteil, das die Innenseite der Aufnahme (1) auskleidet.

9. Aufnahme (1) nach Anspruch 8, wobei das Kunststoffinnenteil eine oder mehrere Verstärkungsrippen (15) und/oder Anschluss- und/oder Befestigungselemente, insbesondere Kabelführungen (16) umfasst.

## Claims

1. Holder (1) for a shock absorber element, in particular for a suspension strut of a motor vehicle, having a support bearing (7) for the shock absorber element, the holder (1) and the support bearing (7) being formed in one piece as an organic sheet component (1a), wherein that region of the organic sheet component (1a) which forms the support bearing (7) is of resilient elastic form, **characterized in that** the organic sheet component (1a) comprises two different strengthening fibres, wherein that region of the organic sheet component (1a) which forms the support bearing (7) comprises strengthening fibres of lower stiffness than strengthening fibres that are provided in another region, or in all other regions, of the organic sheet component (1a).

2. Holder (1) according to Claim 1, wherein that region of the organic sheet component (1a) which forms the support bearing (7) is formed so as to be resiliently elastic in the direction of a spring travel of a shock absorber element received in the holder (1).

3. Holder (1) according to Claim 1 or 2, wherein that region of the organic sheet component (1a) which forms the support bearing (7) has an uneven surface.

4. Holder (1) according to Claim 3, wherein that region of the organic sheet component (1a) which forms the support bearing (7) is circular or ring-shaped and has an undulating surface, wherein the undulations run concentrically around the central point of that region of the holder (1) which forms the support bearing (7).

5. Holder (1) according to Claim 3 or 4, wherein that region of the organic sheet component (1a) which forms the support bearing (7) is circular or ring-shaped and has one or more beads (8) which run concentrically around the central point of that region of the holder (1) which forms the support bearing (7).

6. Holder (1) according to one of the preceding claims, wherein that region of the organic sheet component (1a) which forms the support bearing (7) has a lower stiffness than other regions, or all other regions, of the organic sheet component (1a).

7. Holder (1) according to Claim 1, wherein the relatively stiff strengthening fibres are formed by carbon fibres.

8. Holder (1) according to one of the preceding claims, wherein, on an inner side of the holder (1), there is moulded a plastics inner part, in particular a plastics inner part that lines the inner side of the holder (1).

9. Holder (1) according to Claim 8, wherein the plastics inner part comprises one or more strengthening ribs (15) and/or attachment and/or fastening elements, in particular cable guides (16).

## Revendications

1. Réceptacle (1) pour un élément d'amortisseur de chocs, en particulier pour une jambe de suspension d'un véhicule automobile, avec un palier d'appui (7) pour l'élément d'amortisseur de chocs, le réceptacle (1) et le palier d'appui (7) sont réalisés en une seule pièce sous la forme d'un composant en tôle organique (1a), dans lequel la région du composant en tôle organique (1a) formant le palier d'appui (7) est réalisée sous forme élastique, **caractérisé en ce que** le composant en tôle organique (1a) contient deux fibres de renforcement différentes, dans lequel la région du composant en tôle organique (1a) formant le palier d'appui (7) contient des fibres de renforcement, qui sont moins rigides que des fibres de renforcement, qui sont contenues dans une autre ou dans toutes les autres région(s) du composant en tôle organique (1a).

2. Réceptacle (1) selon la revendication 1, dans lequel la région du composant en tôle organique (1a) formant le palier d'appui (7) est réalisée sous forme élastique dans la direction d'une course de ressort d'un élément d'amortisseur de chocs logé dans le réceptacle (1).

3. Réceptacle (1) selon la revendication 1 ou 2, dans lequel la région du composant en tôle organique (1a) formant le palier d'appui (7) présente une surface inégale.

4. Réceptacle (1) selon la revendication 3, dans lequel la région du composant en tôle organique (1a) formant le palier d'appui (7) est de forme circulaire ou annulaire et présente une surface ondulée, dans lequel les ondes sont concentriques autour du point central de la région du réceptacle (1) formant le palier d'appui (7).

5. Réceptacle (1) selon la revendication 3 ou 4, dans lequel la région du composant en tôle organique (1a) formant le palier d'appui est de forme circulaire ou annulaire et présente une ou plusieurs moulure (s) (8), qui sont concentriques autour du point central de la région du réceptacle (1) formant le palier d'appui (7).

6. Réceptacle (1) selon l'une quelconque des revendications précédentes, dans lequel la région du composant en tôle organique (1a) formant le palier d'appui (7) présente une plus faible rigidité que d'autres ou que toutes les autres régions du composant en tôle organique (1a).

7. Réceptacle (1) selon la revendication 1, dans lequel les fibres de renforcement plus rigides sont formées par des fibres de carbone et/ou de charbon.

8. Réceptacle (1) selon l'une quelconque des revendications précédentes, dans lequel une partie intérieure en matière plastique est pulvérisée sur un côté intérieur du réceptacle (1), en particulier une partie intérieure en matière plastique, qui recouvre le côté intérieur du réceptacle (1).

9. Réceptacle (1) selon la revendication 8, dans lequel la partie intérieure en matière plastique comprend une ou plusieurs nervure (s) de renforcement (15) et/ou des éléments de raccordement et/ou de fixation, en particulier des guides de câbles (16).
